# EUROPEAN PATENT APPLICATION

(11) **EP 1 396 790 A2**
(43) Date of publication of application: **10.03.2004**
(21) Application number: 03255536.9
(22) Date of filing: 04.09.2003
(51) Int. Cl.: G06F 12/08, G06F 12/06, G06F 12/10

(54) **Remote translation mechanism of a virtual address from a source a node in a multi-node system**

(30) Priority: 04.09.2002 US 235898; 18.08.2003 US 643588; 18.08.2003 US 643758
(71) Applicant: Cray Inc., Seattle, Washington 98014-2860 (US)
(72) Inventor: Sheets, Kitrick, Morrisville 27560, North Carolina (US); Hastings, Andrew B, Mendota Heights 55120, Minnesota (US); Scott, Steven L, Eau Claire 54701, Wisconsin (US)
(74) Representative: Collins, John David

(57) **Abstract**

A remote translation mechanism for a multi-node system including a method for remotely translating a virtual memory address into a physical memory address in a miulti-node system. The method includes providing the virtual memory address at a source node, determining that the virtual memory address is to be sent to a remote node, sending the virtual memory address to the remote node, and translating the virtual memory address on the remote node into a physical memory address using a remote-translation table (RTT). The RTT contains translation information for an entire virtual memory address space associated with the remote node. Further, a physical node to query is determined based on the virtual memory address. An emulated remote translation table (ERTT) segment is queued on the determined physical node to see if the ERTT segment may provide a translation. If the translation is received then the translation may be loaded into a TLB on the source node.

## Description

### Field of the Invention

The present invention relates generally to the field of computer memory systems, and more particularly to a remote translation mechanism for a multi-node system.

### Copyright Notice/Permission

A portion of the disclosure of this patent document contains material that is subject to copyright protection. The copyright owner has no objection to the facsimile reproduction by anyone of the patent document or the patent disclosure as it appears in the European Patent Office patent file or records, but otherwise reserves all copyright rights whatsoever. The following notice applies to the software and data as described below and in the drawings hereto: Copyright © 2003, Cray, Inc. All Rights Reserved.

### Background of the Invention

Multiprocessor computer systems include a number of processing nodes connected together by an interconnection network. Typically, each processing node includes one or more processors, a local memory, and an interface circuit connecting the node to the interconnection network. The interconnection network is used for transmitting packets of information between processing nodes.

Distributed, shared-memory multiprocessor systems include a number of processing nodes that share a distributed memory element. By increasing the number of processing nodes, or the number of processors within each node, such systems can often be scaled to handle increased demand. In such a system, each processor is able to access local memory, or memory of other (remote) processing nodes. Typically, a virtual address is used for all memory accesses within a distributed, shared-memory multiprocessor system, and is translated into a physical address in the requesting node's translation look-aside buffer (TLB). Thus, the requesting node's TLB will need to contain address translation information for all the memory that the node is able to access (local or remote). This amount of address translation information can be substantial, and can result in much duplication of translation information throughout the multiprocessor system (e.g., if the same page of memory is accessed by 64 different nodes, the TLB used by each node will need to contain an entry for that page). This type of system does not scale efficiently to very large numbers of processors.

Therefore, there is a need for an address translation mechanism in a multi-processor system that addresses these and other shortcomings.

### Summary

To address these and other needs, various embodiments of the present invention are provided. One embodiment of the invention provides a method for remotely translating a virtual memory address into a physical memory address in a multi-node system. The method includes providing the virtual memory address at a source node, determining that the virtual memory address is to be sent to a remote node, sending the virtual memory address to the remote node, and translating the virtual memory address on the remote node into a physical memory address using a remote-translation table (RTT). The RTT contains translation information for an entire virtual memory address space associated with the remote node.

Another embodiment of the invention provides a method for translating a virtual memory address in a multi-node system. The method includes providing a virtual memory address on a local node by using a virtual address of a load or a store instruction, identifying a virtual node associated with the virtual memory address, and determining if the virtual node corresponds to the local node. If the virtual node corresponds to the local node, then the method includes translating the virtual memory address into a local physical memory address on the local node. If, instead, the virtual node corresponds to a remote node, then the method includes sending the virtual memory address to the remote node, and translating the virtual memory address into a physical memory address on the remote node.

A further embodiment of the invention provides a method for translating a virtual memory address in a multi-node system. The method includes providing a virtual memory address on a local node by using a virtual address of a load or a store instruction, identifying a virtual node associated with the virtual memory address, and determining if the virtual node corresponds to the local node. If the virtual node corresponds to the local node, then the method includes translating the virtual memory address into a local physical memory address on the local node. If, instead, the virtual node corresponds to a remote node, then the method includes sending the virtual memory address to the remote node, and translating the virtual memory address into a physical memory address on the remote node.

One aspect of the systems and methods includes translating a virtual memory address into a physical memory address in a multi-node system that is initiated by providing the virtual memory address at a source node. A determination is made that a translation for the virtual memory address does not exist. A physical node to query is determined based on the virtual memory address. An emulated remote translation table (ERTT) segment is queried on the determined physical node to see if the ERTT segment may provide a translation. If the translation is received then the translation may be loaded into a TLB on the source node. Otherwise a memory reference error may be generated for the entity or application referencing the invalid virtual memory address.

A further aspect is that the ERTT segment may be located in generally accessible node memory, e.g. memory that is available for general purpose use by applications and the kernel.

The present invention describes systems, clients, servers, methods, and computer-readable media of varying scope. In addition to the aspects and advantages of the present invention described in this summary, further aspects and advantages of the invention will become apparent by reference to the drawings and by reading the detailed description that follows.

### Brief Description of the Drawings

- FIG. 1: illustrates a block diagram of a node that includes four multi-streaming processors, according to one embodiment of the present invention.
- FIG. 2A: illustrates a format for a physical memory address, according to one embodiment of the present invention.
- FIG. 2B: illustrates a more detailed map of the physical memory address format shown in FIG. 2A, according to one embodiment of the present invention.
- FIG. 3: illustrates a format for a virtual memory address, according to one embodiment of the present invention.
- FIG. 4: illustrates a flow diagram for analyzing a VNode field in the virtual memory address, according to one embodiment of the present invention.
- FIG. 5: illustrates a detailed flow diagram for implementing remote translation of a virtual memory address, according to one embodiment of the present invention.
- FIG. 6A: illustrates a block diagram of a remote-translation table (RTT) resident on an M chip, according to one embodiment of the present invention.
- FIG. 6B: illustrates a more detailed diagram of the RTT shown in FIG. 6A, according to one embodiment ofthe present invention.
- FIG. 6C: illustrates a more detailed view of a portion of the RTT shown in FIG. 6B, according to one embodiment of the present invention.
- FIG. 6D: illustrates an even further detailed view of a portion of the RTT shown in FIG. 6C, according to one embodiment of the present invention.
- FIG. 7: provides a functional view of a model for routing memory access requests according to an embodiment of present invention.
- FIG. 8: provides a method for construction of a distributed address space according to an embodiment of the present invention.
- FIG. 9: provides a flow diagram of RTT aggregation according to an embodiment of the present invention.
- FIG. 10: shows a flow diagram of a method according to an embodiment of the present invention.
- FIG. 11: shows a perspective view of a system according to an embodiment of the present invention.
- FIG. 12: is a block diagram of parallel processing hardware and operating environment in which different embodiments of the invention can be practiced;
- FIG. 13: is a block diagram of an emulated remote translation table segment according to an embodiment of the invention;
- FIG. 14: is a block diagram illustrating an exemplary configuration for using an emulated remote translation table according to an embodiment of the invention; and
- FIG. 15: is a flowchart illustrating a method according to an embodiment of the invention.

### Detailed Description

In the following detailed description of the preferred embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention.

Some portions of the detailed descriptions which follow are presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable ofbeing stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms arc to be associated with the appropriate physical quantities and are merely convenient labels applied to these quantities. Unless specifically stated otherwise as apparent from the following discussions, terms such as "processing" or "computing" or "calculating" or "determining" or "displaying" or the like, refer to the action and processes of a computer system, or similar computing device, that manipulates and transforms data represented as physical (e.g., electronic) quantities within the computer system's registers and memories into other data similarly represented as physical quantities within the computer system memories or registers or other such information storage, transmission or display devices.

In the Figures, the same reference number is used throughout to refer to an identical component which appears in multiple Figures. Signals and connections may be referred to by the same reference number or label, and the actual meaning will be clear from its use in the context of the description.

The following detailed description is, therefore, not to be taken in a limiting sense, and the scope of the present invention is defined only by the appended claims.

Various embodiments of the present invention provide a virtual-to-physical address translation mechanism for a shared-memory multiprocessor that scales efficiently to large numbers of processors. This mechanism supports a single virtual address format (e.g., using load or store instructions), and detects whether a reference for the instruction is to the local node or a remote node. If to a local node, or if remote translation is not enabled, the virtual to physical address translation is performed in the local translation look-aside buffer (TLB), producing a physical address that includes both the physical node number and the physical memory offset within that node. If remote translation is enabled, however, and the virtual address is for a remote node (as determined by comparing the virtual node field of the virtual address with the value representing the local virtual node number), then a remote address translation mechanism is used, as follows. A physical node number is determined by adding the virtual node field of the virtual address to a physical base node. The virtual node number is also checked against a limit value, to ensure that the request is within allowable bounds. The remainder of the virtual address forms a virtual offset, which is sent with the memory request to the destination physical node. A "global address space identifier" (GASID) is also looked up for the local processor and sent with the request. The GASID and the upper portion of the virtual address are used to index into a remote translation table (RTT) at the destination node, to produce a physical page number at the remote node. The RTT is sized to cover the entire virtual address space at a single node. The use of the GASID allows multiple applications, with overlapping virtual address ranges, to share memory on the same node while all using the remote translation mechanism. Essentially, the GASID forms a unique extension to the virtual address offset for each application.

The address translation mechanism of these embodiments scales to large system sizes, because each node keeps track of virtual to physical page mappings for its node only. The TLB is used for references to the local node by the local processor, and the RTT at a node is used for incoming references to the local node from remote nodes. A single virtual address format and access mechanism arc used for both local and remote memory references. The use of remote translation is thus functionally transparent. The RTT keeps a full map of the remote virtual address space, and each node is able to manage its virtual-to-physical address mapping independently.

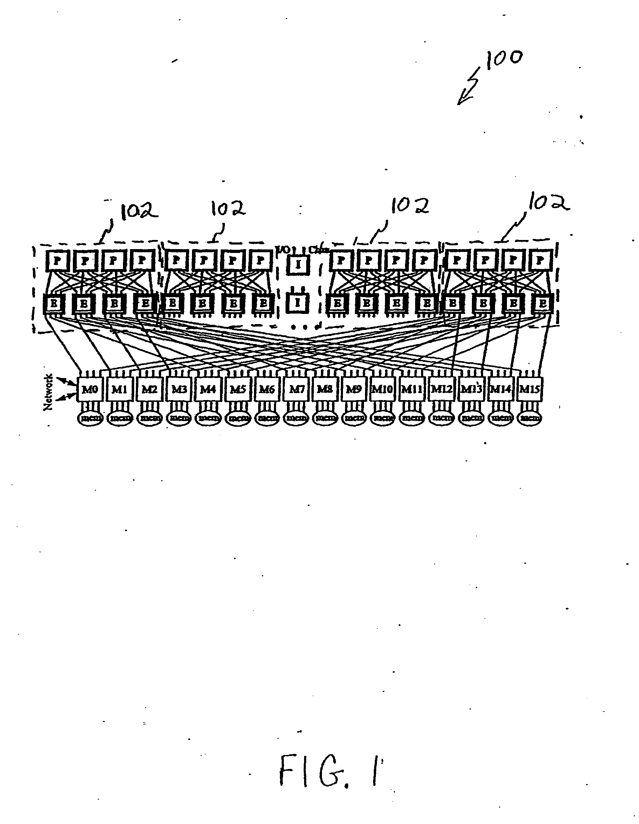

FIG. 1 illustrates a specific hardware environment in which various embodiments of the present invention may be practiced. It is to be noted that FIG. 1 illustrates only one example of a hardware environment, and other environments (for other embodiments) may also be used.

FIG. 1 illustrates a block diagram of a node that includes four multi-streaming processors (MSP's), according to one embodiment. In this embodiment, node 100 includes each MSP 102 in a four MSP system. Node 100 is contained on a single printed circuit board. The sixteen M chips on node 100 contain memory controllers, network interfaces and cache coherence directories with their associated protocol engines. The memory system is sliced across the 16 M chips, round robin by 32-byte cache lines. Each M chip supports one slice. Bits 5 and 6 of the physical address determine the E chip within a processor, and bits 7 and 8 further specify one of four M chips connected to each E chip.

Each M chip resides in one of sixteen independent address slices of the machine, and the interconnection network provides connectivity only between corresponding M chips on different nodes. All activity (cache, memory, network) relating to a line of memory stays within the corresponding slice. Each M chip controls a separate sector of a slice. Slices expand (get more memory in each) as nodes arc added so the number of sectors in each slice is equal to the number of nodes in a system.

Total peak local memory bandwidth for one node is 204.8 GB/s, or 51.2 GB/s per MSP. As each MSP 102 needs a maximum bandwidth of about 45 GB/s, there is bandwidth to support network traffic and I/O without greatly impacting computational performance. Each M chip contains two network ports, each 1.6 GB/s peak per direction.

Node 100 also contains two I chip I/O controller ASIC's. These connect to the M chips and provide four I/O ports of 1.2 GB/s bandwidth, full duplex, off node 100. Each I chip contains two ports, 400 MB/s full duplex connections to 8 of the local M chips (one I chip connects to the even M chips and the other connects to the odd M chips), and a 1.6 GB/s full duplex connection to the other I chip. The total I/O bandwidth per module is thus 4.8 GB/s full duplex.

The memory on node 100 is distributed across the set of 16 M chips. Each M chip directly controls the resources contained on two daughter boards so that there are thirty two daughter boards on node 100. The memory chips in the daughter boards are Direct Rambus DRAM. These chips have 16 internal banks and have 18 data pins that each run, with a 400 MHz clock, at an 800 Mbaud rate. Each chip then has a 1.6 GB/s read/write data rate. Being 18 bits wide, additional parts to support ECC are not needed. Daughter cards contain 16 chips organized into 4 memory channels of 4 chips each. Each memory channel is independent. Channels have a peak data bandwidth of 1.6 GB/s, so that the card supports a bandwidth of 6.4 GB/s. With 16 banks in a memory chip, a channel has 64 memory banks. Daughter cards with 64 Mbit, 128 Mbit, 256 Mbit or 512 Mbit chips are supported. The design also accommodates chip densities of 1 Gbit if and when they become available, assuming they fit in the design envelope (size, power, etc.). As the memory parts are 18 bits wide instead of 16 in order to support ECC, the chip's bit densities are actually 72, 144, 288, 576 and 1152 Mbits.

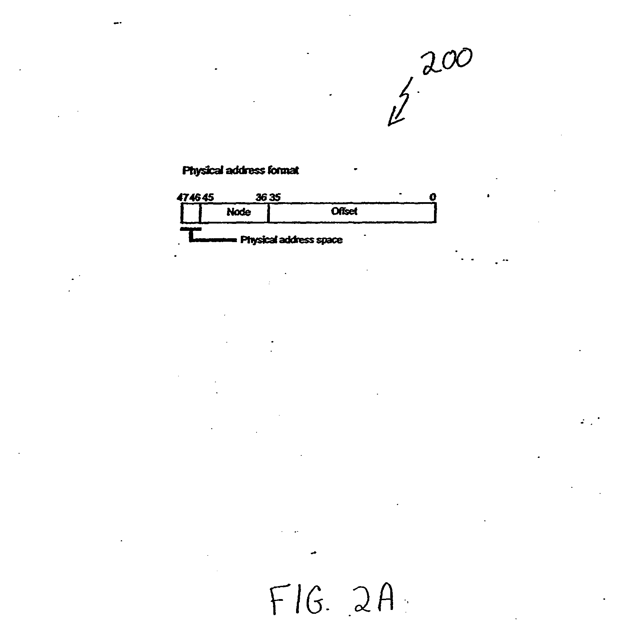

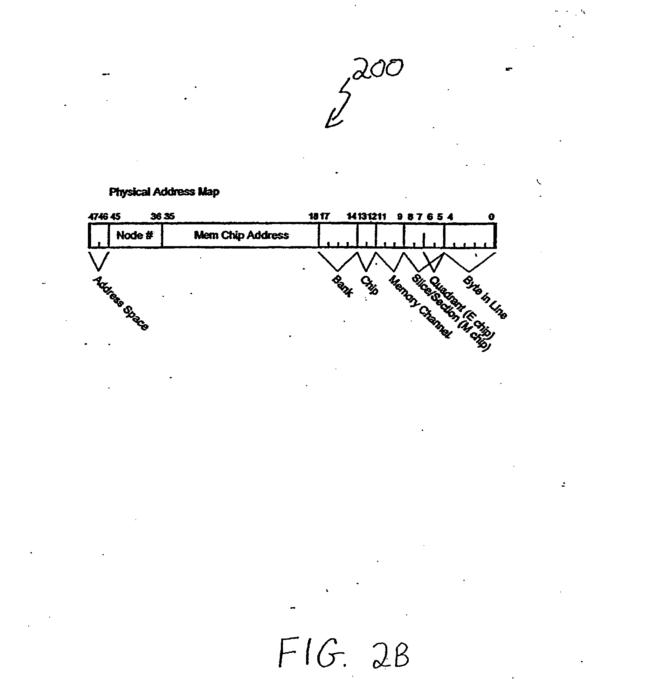

FIG. 2A illustrates a format for a physical memory address, according to one embodiment. In this embodiment, a 46-bit (64 TBytes) physical memory address is supported. The node size for this embodiment is a board containing four MSP's and 16 M chips. Physical memory address format 200 contains bits 47..0. Bits 35..0 represent an offset (into memory). Bits 45..36 represent the node. Bits 47..46 represent the physical address space. The physical memory format allows for up to 1024 nodes (4096 MSP's) and 64 GBytes of physical memory per node. Physical pages are allocated on a per-node basis. That is, any given physical page is distributed uniformly across the 16 sectors (the memory controlled by a given M chip) of a single node. This embodiment provides three parallel, physical address spaces, which are selected by two extra bits at the top of the physical address.

FIG. 2B illustrates a more detailed map of the physical memory address format shown in FIG. 2A, in one embodiment. The mapping of a physical address to a destination location is dependent on the hardware implementation (as opposed to being specified in the user-level architecture). Address mapping must be done so that parallelism can be easily exploited by having the map such that multiple transactions can be requested and satisfied simultaneously with minimum hardware complexity. Bits 4..0 represent the byte in the line. Bits 6..5 represent the quadrant (E chip). Bits 8..5 collectively represent the slice/section (M chip). Bits 11..9 represent the memory channel. Bits 13..12 represent the memory chip for the memory channel, and bits 17..14 represent the bank for the memory chip. Bits 35..18 represent the memory chip address, and bits 45..36 represent the node number (in the system). Bits 47..46 represent the address space. Memory size options and configuration changes (including memory degrades) can modify this map. The map supports memory chips up to 1 Gbit density. There are three address spaces: coherent main memory, memory-mapped register space, and I/O device space. Coherent main memory may be cached.

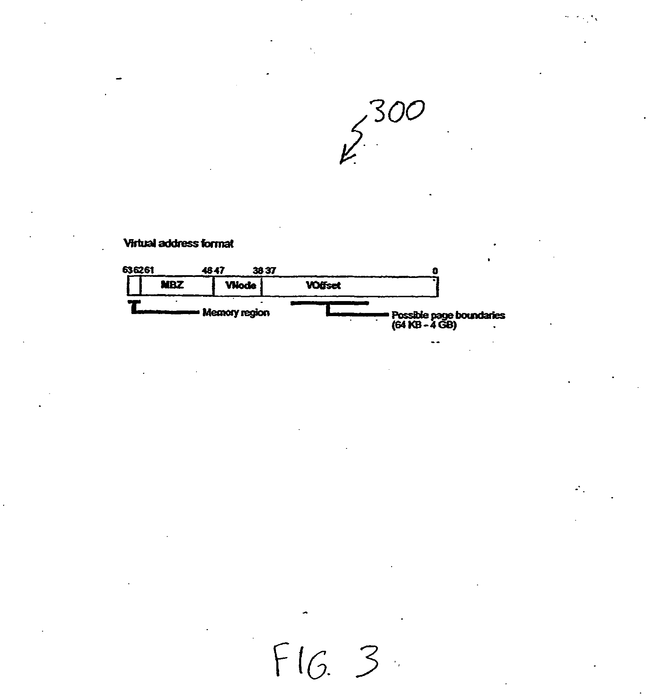

FIG. 3 illustrates a format for a virtual memory address, according to one embodiment. In this embodiment, virtual memory address format 300 contains a 64-bit virtual address space. Bits 37..0 represent a virtual offset into virtual memory space, wherein potential page boundaries range from 64 KB to 4 GB. Bits 47..38 represent the VNode (i.e., virtual node). This is used by the hardware when performing remote address translation. Bits 61..48 must be set to zero in this implementation. Bits 63..62 specify the memory region, which determines the type of address translation used in kernel mode. The virtual address space can be considered a flat virtual address space for uniprocessor, or symmetric multiprocessing applications. As stated, this embodiment supports eight page sizes ranging from 64 KB to 4 GB. Thus, the page boundary can vary, from between bits 15 and 16, to between bits 31 and 32.

In various embodiments of the invention, virtual addresses used for instruction fetches and data references are first translated into physical addresses before memory is accessed. These embodiments support two forms of address translation: source translation, and remote translation. The first form of address translation is source translation, in which a virtual address is fully translated by a Translation Look-aside Buffer (TLB) on a local P chip to a physical address on an arbitrary node. The second form of address translation is remote translation, in which the physical node number is determined by a simple translation of the virtual address VNode field, and the remaining virtual address VOffset field is sent to the remote node to be translated into a physical address offset via a Remote-Translation Table (RTT). The type of address translation performed is based upon values in a configuration control register and the virtual address itself. Remote translation is performed if all of the following three conditions are true: (1) Remote translation is enabled (e.g., a flag contained in the configuration control register is set); (2) The virtual address is to the useg region (Bits 63..62 = 00 in the virtual address); and (3) The virtual address references a remote node (Bits 47..38 in the virtual address are not equal to a local node value contained in the configuration control register). If any of tbe above conditions are false, then source translation is performed. Remote translation can be enabled/disabled on a per-processor basis.

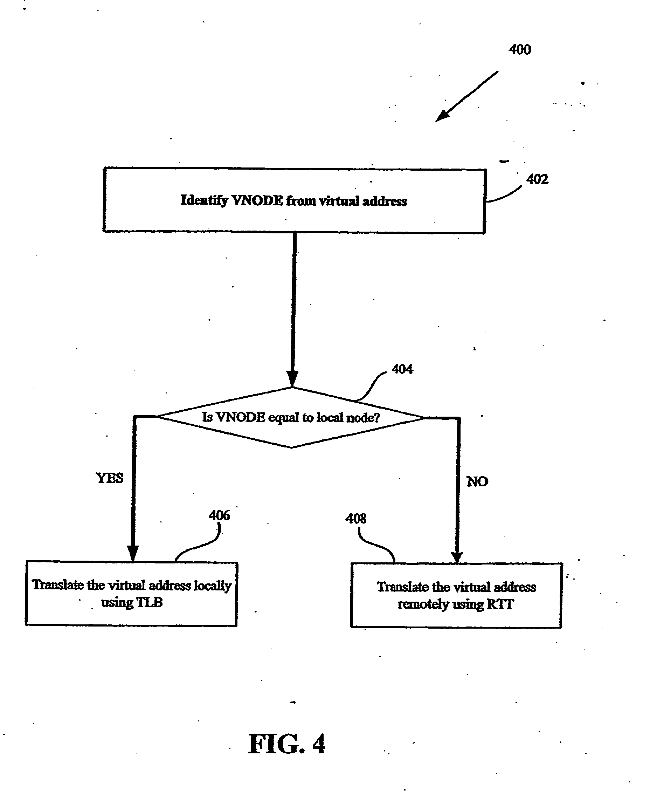

FIG. 4 illustrates a flow diagram for analyzing a VNode field in the virtual memory address, according to one embodiment of the present invention. Flow diagram 400 includes blocks 402, 406, and 408, and also includes checkpoint 404. Flow diagram 400 illustrates one way in which a virtual memory address can be translated into a physical memory address (in either local or remote memory space). Block 402 includes identifying the virtual node from a virtual address. In one implementation, a local node can identify the virtual node by looking at the VNode field of the virtual address. Checkpoint 404 determines if the virtual node is the same as, or equal to, the local node. If so, flow diagram 400 continues to block 406, wherein the virtual address is translated into a physical address locally using a Translation Look-Aside Buffer (TLB). The local node is then able to address local physical memory space. If the virtual node is not the same as the local node, then flow diagram 400 continues to block 408, wherein the virtual address is translated into a physical address remotely (on a remote node) using a Remote-Translation Table (RTT). In this fashion, the local node is effectively able to address remote memory space of the remote node.

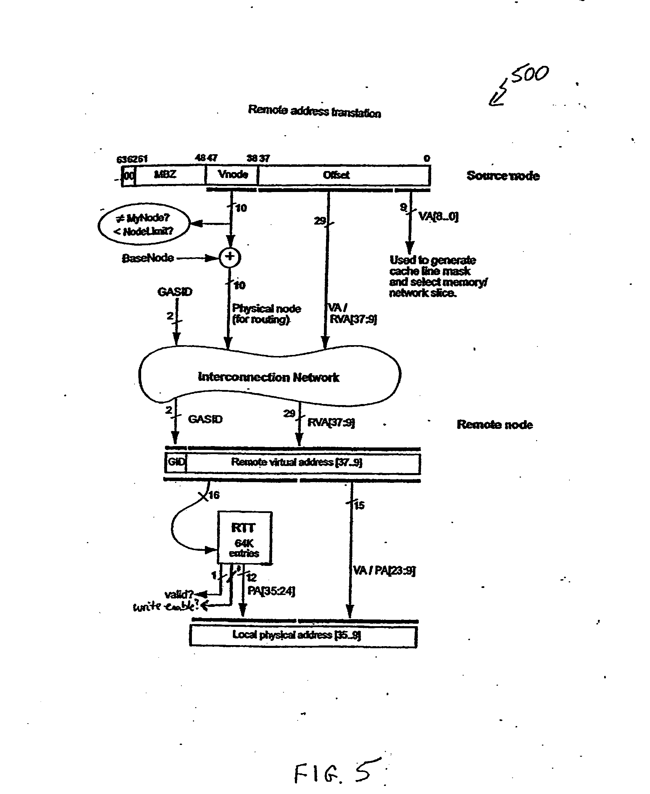

FIG. 5 illustrates a detailed flow diagram 500 for implementing remote translation of a virtual memory address, according to one embodiment of the present invention. When remote translation is enabled, the hardware treats bits 47..38 of the Virtual Address (i.e., VA47-.38, for the VNode field) as a virtual node number. As described above, all use virtual addresses with a VNode value not matching the local virtual node number are translated remotely. Additionally, the address is checked to make sure it does not exceed the user's partition defined by the NodeLimit field in the TLBcontrol register. If VA47..38 > NodeLimit, then an Address Error exception occurs.

The physical node number for the address is computed by adding VA47..38 to the BaseNode value from the TLBcontrol register. (In this instance, the BaseNode is a reference mechanism by which the physical node number can be computed.) Overflow on this 10-bit addition is ignored; the OS must never create a partition (via the BaseNode and NodeLimit values) that exceeds the number of nodes in the machine. The virtual address Offset field (VA37..0) is sent to the resulting physical node as an Arcmote virtual address@ (RVA) to complete the translation. (The RVA could also be referred to as a remote virtual memory address.) The cache allocation is forced to non-allocate and the reference is not cached (Get/Put semantics).

The value of the BaseNode is unique to each node. This creates a unique physical node mapping when adding the BaseNode to the VNode field. Therefore, in one implementation, various nodes can use common, contiguous VNodes (starting at 0, for example) to effectively reference different physical nodes (that are used for routing). Table 1 below illustrates an example of physical (destination) node mapping for three different source nodes A, B, and C.

**Table 1 -**

| **Physical Node Calculation** | | |
|---|---|---|
| Source Node | VNode | Physical Node |
| A (Base Node = 100) | 0 | 100 |
| A | 1 | 101 |
| A | 2 | 102 |
| B (Base Node = 200) | 0 | 200 |
| B | 1 | 201 |
| B | 2 | 202 |
| C (Base Node = 300) | 0 | 300 |
| C | 1 | 301 |
| C | 2 | 302 |

In another embodiment, a look-up table is used to determine the physical node. In this embodiment, the BaseNode calculation is not required.

RVA requests bypass the Ecache (in the E chips), since they can never be cached. The M chips contain a set of four, 2-bit Global Address Space ID (GASID) registers, one for each of the local MSP's. When the local M chip sends a packet out the network with an RVA, it includes the value of the two bit GASID for the originating MSP. This is used to qualify the remote translation of the RVA at the destination M chip. Thus, the 2-bit GASID, and the RVA, are routed through the interconnection network. Bits 8..0 of the virtual address are not routed as such, because bits 8-.5 are used to select the memory/network slice, and bits 4..0 are used to generate the cache line word mask. The cache line mask is unneeded for the remote translation mechanism, and the slice information is also unneeded, since the remote transfer operations have an implied slice (from an M chip on one node to a corresponding M chip on the remote node).

At the remote M chip, remote virtual addresses go through a translation to a pure physical address. This translation takes place before presenting the packet to the directory protocol engine. Remote translation takes place with a granularity of 16 MB. The two GASID bits, and bits 37..24 of the RVA, are used to index into a 64K-entry Remote-Translation Table (RTT). Each entry ofthis table contains a valid bit, a write-enable bit, and a 12-bit value representing PA35..24 (the 16 MB physical page frame). These bits are appended to the lower bits of the RVA to form a physical memory address at the remote node. The valid bit is used for status of the translation. The valid bit indicates whether the RTT was able to translate the virtual memory address into a valid physical memory address space on the remote node.

The write-enable bit, or flag, indicates whether a write is permitted to a region referenced by the virtual memory address. A write to this region will only be allowed if the write-enable bit is set.

In one embodiment, the RVA is formed from one or more portions of the virtual address having the VNode field. In another embodiment, the RVA includes a virtual memory address, wherein the virtual memory address is translated into a physical memory address using the RTT.

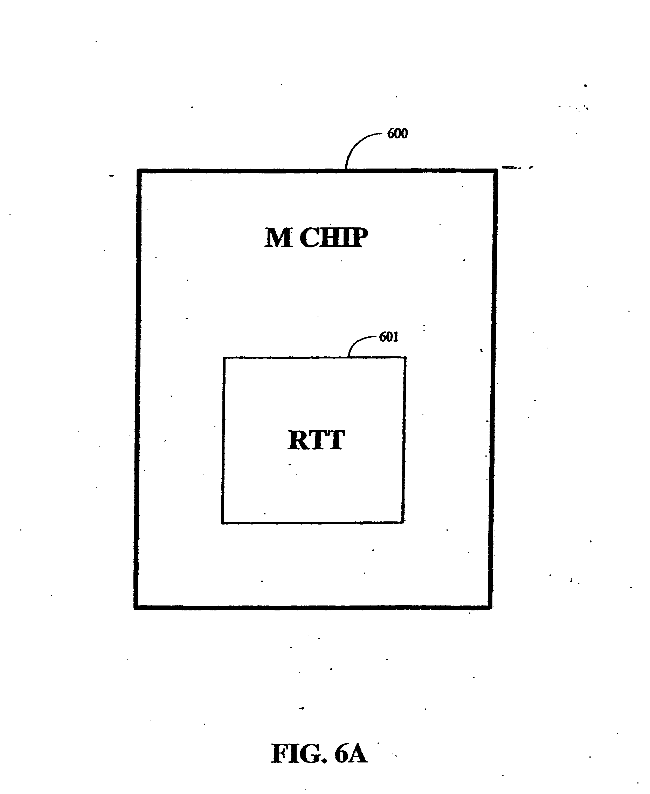

FIG. 6A illustrates a block diagram of a remote-translation table (RTT) resident on an M chip, according to one embodiment of the present invention. M chip 600 on a given node in a multi-node system includes RTT 601.

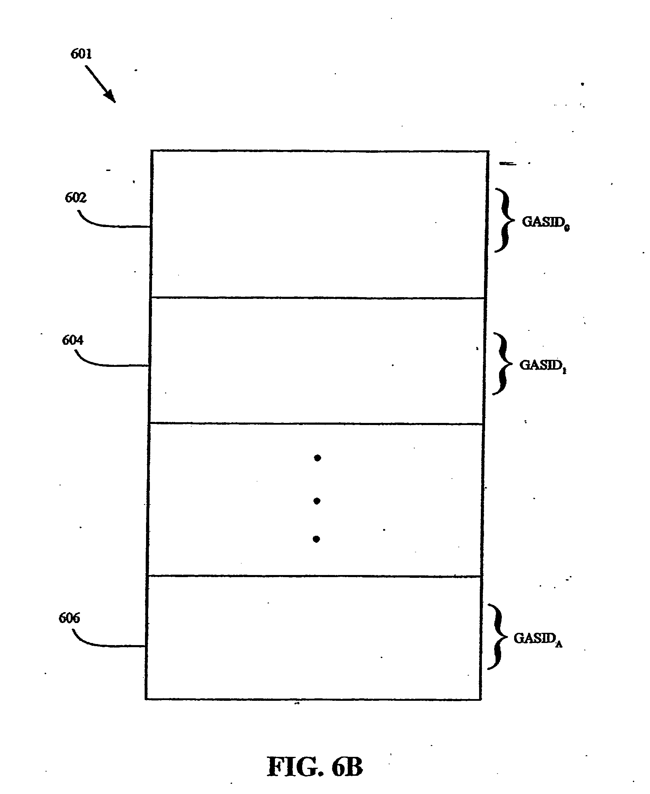

FIG. 6B illustrates a more detailed diagram of the RTT shown in FIG. 6A, according to one embodiment on the invention. RTT 601 is indexed by a GASID and high-order bits of an RVA. The GASID comprises the highest-order bits of the index into RTT 601. RTT 601 is partitioned into various sections. Because the GASID comprises the highest-order bits, this embodiment shows RTT 601 being partitioned into sections corresponding to the different GASID's. In one implementation, these GASID's are associated with specific applications (or processors) operating on a MSP. RTT 601 includes section 602 for translation information corresponding to GASID₀ (at the top of RTT 601). Section 602 will not necessarily include translation information that is contiguous (i.e., in order). The information will be ordered as it is implemented by the application use for GASID₀. RTT 601 contains translation information for the entire virtual memory address space for the node on which it resides, and therefore not all of the information in section 602 is used, or contiguous (if used). Section 604 includes translation information corresponding to GASID₁, and section 606 includes translation information corresponding to GASID_{A}.

In one implementation, the index into RTT 601 includes 2 high-order bits for the GASID, and 14 high-order bits from the RVA, thereby producing a 16-bit index into RTT 601. In this implementation, there are four GASID's (from the 2 GASID bits), and therefore A is equal to 3. RTT 601 includes 64K entries (2¹⁶), and each of sections 602, 604, and 606 includes 16K entries, wherein not all of the entries are necessarily applicable, or used, for the remote translation mechanism.

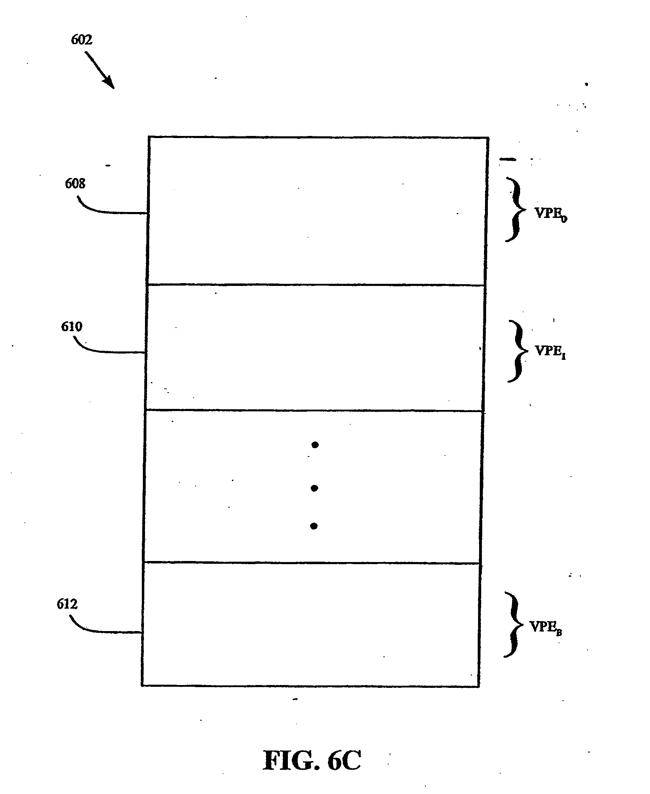

FIG. 6C illustrates a more detailed view of a portion of the RTT shown in FIG. 6B, according to one embodiment of the invention. FIG. 6C illustrates a detailed view of section 602 (corresponding to GASID₀) in RTT 601. In this embodiment, certain high-order bits of the RVA used to index into RTT 601 correspond to virtual processing elements (VPE) on a given node. Translation information is ordered within section 602 according to the VPE to which it is associated. Section 608 includes information corresponding to VPE₀. Section 610 includes information corresponding to VPE₁, and section 612 includes information corresponding to VPE_{B}.

In one implementation, there are 4 VPE's (in a MSP system), and therefore B is equal to 3. In this implementation, each of sections 608, 610, and 612 includes 4K entries (for this portion of RTT 601).

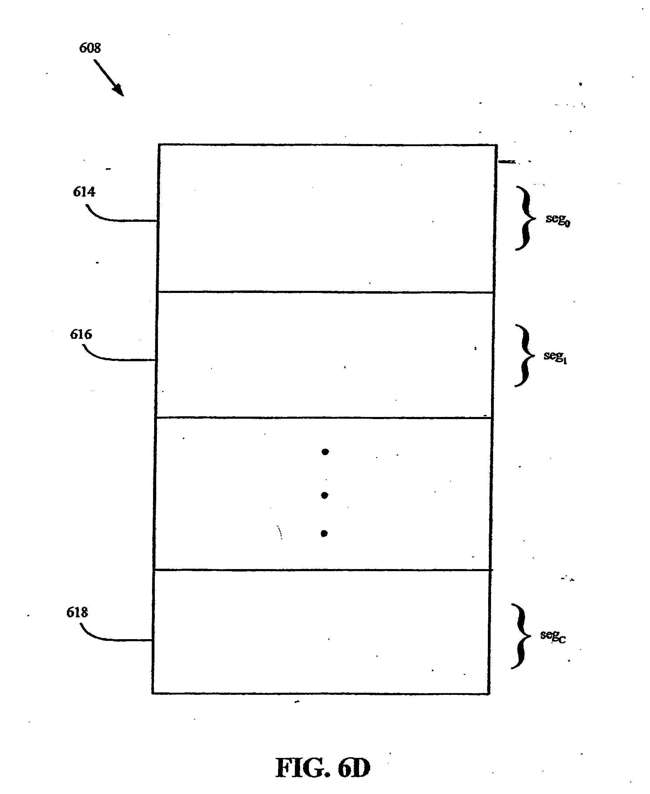

FIG. 6D illustrates an even further detailed view of a portion of the RTT shown in FIG. 6C, according to one embodiment of the invention. FIG. 6D illustrates a detailed view of section 608 (corresponding to VPE₀) in RTT 601. In this embodiment, certain bits of the RVA used to index into RTT 601 correspond to segments. Information is ordered within section 608 according to the segment to which it is associated. Section 614 includes information corresponding to seg₀. Section 616 includes information corresponding to seg₁, and section 618 includes information corresponding to seg_{c}.

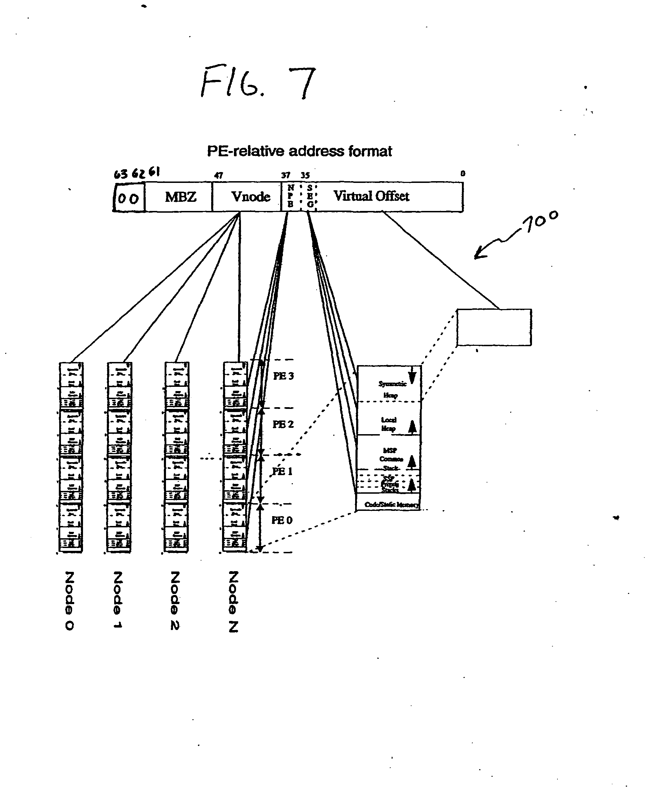

In some embodiments, a way to think of the remote translation mechanism is as a hardware facility that supports automatically "stitching together" the local address spaces of cooperating tasks on a series of nodes. When remote translation is enabled, the hardware routes memory access requests to the logical nodes indicated in the VNode field of the user address. FIG. 7 provides a functional view of an exemplary embodiment of this routing model.

Using this routing model, it is possible to devise an approach to mapping the processing-element-relative space by first building a series of independent on-node spaces, each consisting of the address spaces for their respective individual processing elements (i.e., one address space per processing element per node), and then combining them into a single contiguous space by enabling remote translation across a job or application. In some embodiments, each of the on-node address spaces are built and managed locally using source mode translation, thus allowing the use of standard memory mapping techniques and APIs for management of this space.

Each of these on-node address spaces are then exported (or broadcast) across the job or application space by loading the local address mappings into the RTT and entering remote translation mode. In some embodiments, it is important for all nodes to synchronize their transition to remote translation mode before resuming normal execution to ensure that valid translations exist for all nodes across the job or application space. In some such embodiments, failure to synchronize the transition to remote translation mode results in unexpected application termination because unsuccessful remote address translations are always fatal on some systems and often fatal on other systems.

Once this address space initialization has completed and the job or application is in normal operation, the operating system is responsible for maintaining coherency of the remote mapping space. The operating system will ensure that all valid local translations for the distributed memory job are loaded in the RTT. This requires that all memory for all local processing elements within the job or application is resident whenever the job is active. In addition, the operating system requires that whenever the memory space for a particular processing element is grown, it is grown on the processing element's local node. Doing so allows the operating system to use its normal methodology for handling memory growth within distributed memory jobs. After growing the processing element's address space locally as requested, the RTT can be updated, making the new space available to remote processing elements within the job or application.

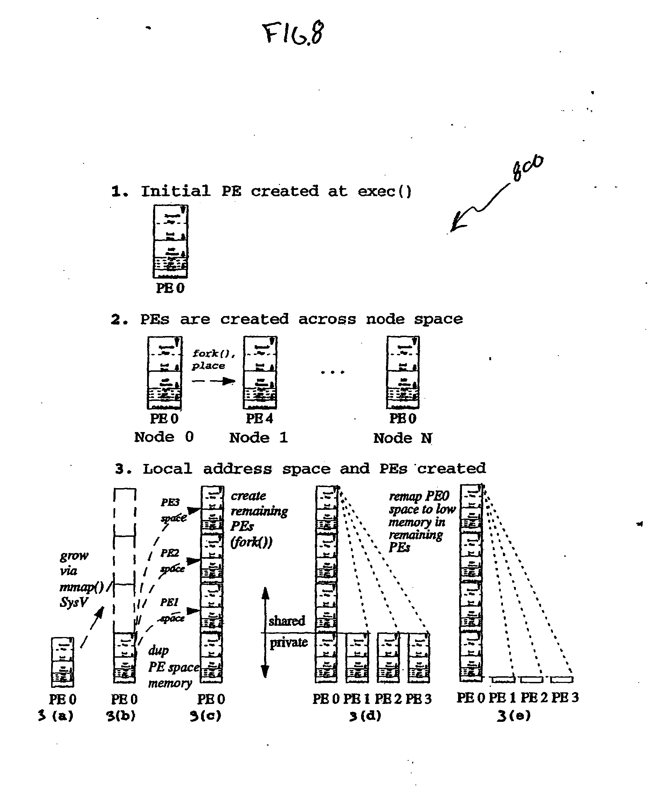

FIG. 8 shows an exemplary embodiment 800 of how a distributed address space is constructed according to one embodiment of the present invention. Step 1 of the example 800 shows the layout of the initial processing element's address space. Tn Step 2, the initial processing element copies itself and places children, one per node, across the node space of the job. Step 3 shows the continuation of the example 800 by illustrating the construction of the local address and processing element space on Node 0. As shown in steps 3b and 3c of this example 800, the address space for the processing elements local to this node is built using standard memory APIs. Step 3d then creates the remaining processing elements. The example 800 keeps processing element 0's memory private during this step to allow each processing element to complete its initialization in a protected address space.

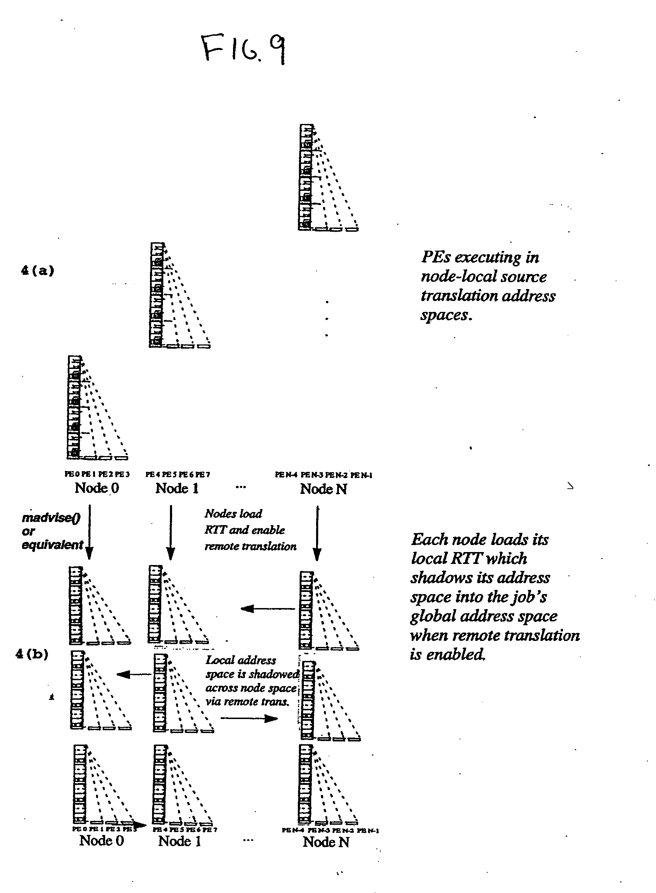

At this point the on-node processing element and memory space initialization is complete and the component node spaces are ready to combine into the desired aggregate. FIG. 9 illustrates one embodiment of how this aggregation is performed.

Once the local address spaces have been constructed on the respective nodes, a representative processing element from each node group will request the operating system to load the remote translation table and enable remote translation mode. FIG. 9 shows one embodiment of how this is performed. In step 4a the independent node address spaces are shown. Note that each has been offset during its initialization based on its place within the global job space and according to the programming environment's distributed memory addressing model. In some embodiments, at this point the processing elements on each local node have synchronized with one another and are prepared to enter the global address space. This is performed through an API call by each processing element to the operating system that notifies the OS to enable remote translation. In some embodiments, as part of this call, the OS ensures that all local memory for the job or application is resident and translations are loaded in the RTT.

In some such embodiments utilizing synchronization, upon a successful synchronization, the processing element will be executing with remote translation enabled. This is illustrated at step 4b. Because each node/processing element could reach this point at different times, it is prudent in some embodiments for user code to synchronize across processing elements before utilizing remote memory. In some embodiments, failure to do so could have undesired results including job or application fatal errors or, in some other further embodiments, fatal kernel errors.

In some embodiments, once the job or application is in normal operation in remote translation mode, the operating system will handle requests to change the address space configuration on a node-local basis. For example, in some embodiments, auto-grow-regions which are in the address space must be grown on the node to which they were mapped. In some such embodiments this allows the maintenance of normal mapping semantics by the operating system. In some additional embodiments, once in remote translation mode, any attempt to modify the address space of a distributed application outside scope of the local node will either fail or cause the job or application to terminate.

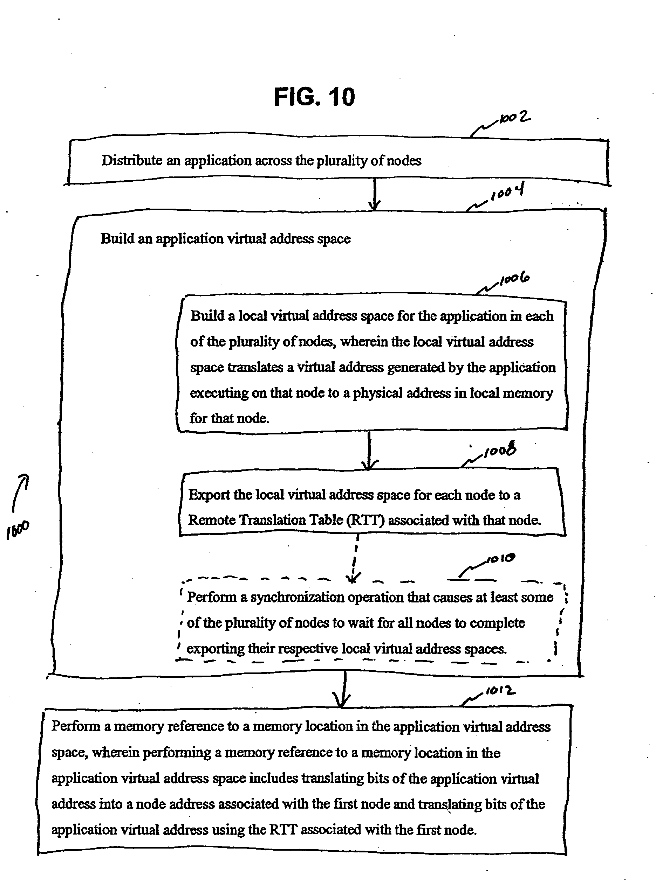

One aspect of the present invention shown in FIG. 10 includes a method 1000 of accessing shared memory in a computer system having a plurality of nodes, including a first node, wherein each node includes a processor and local memory. In some embodiments, this method 1000 includes distributing 1002 an application across the plurality of nodes and building 1004 an application virtual address space. In some such embodiments, building 1004 an application virtual address space includes building 1006 a local virtual address space for the application in each of the plurality ofnodes, wherein the local virtual address space translates a virtual address generated by the application executing on that node to a physical address in local memory for that node, and exporting 1008 the local virtual address space for each node to a Remote Translation Table (RTT) associated with that node. This aspect of the present invention further includes performing 1012 a memory reference to a memory location in the application virtual address space, wherein performing 1012 a memory reference to a memory location in the application virtual address space includes translating bits of the application virtual address into a node address associated with the first node and translating bits of the application virtual address using the RTT associated with the first node. In some further embodiments, the local address space is read from a Translation Look-aside Buffer (TLB). Yet further embodiments of the method 1000 include optionally performing 1010 a synchronization operation that causes at least some of the plurality of nodes to wait for all nodes to complete exporting their respective local virtual address spaces.

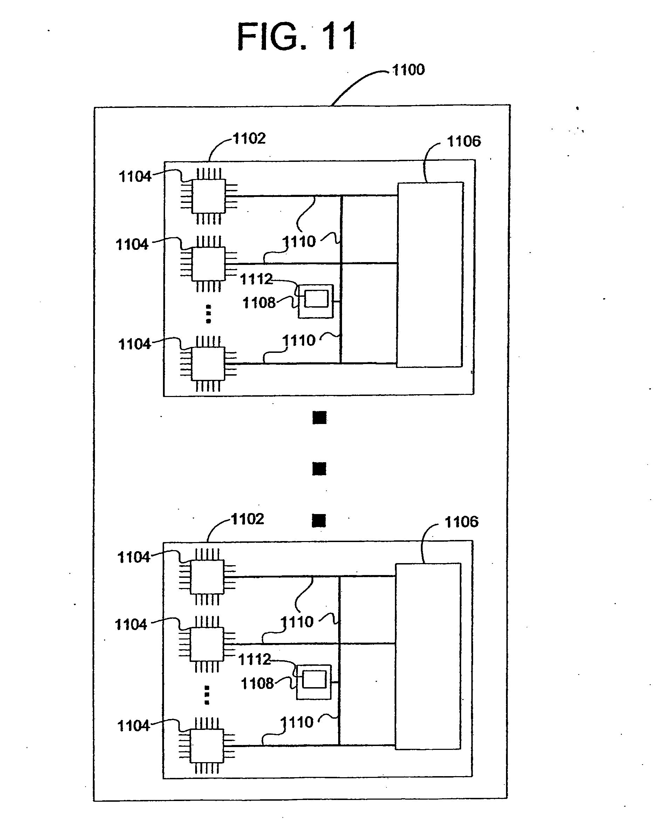

Another aspect of the present invention shown in FIG. 11 provides a system 1100 for remote address translation on a multinode system 1100 capable of distributing an application, job, or process across multiple nodes 1102. In some embodiments, the system 1100 includes a plurality of nodes 1102, each node 1102 having one or more processors 1104, a memory 1106, and a memory controller 1108 operatively coupled 1110 to the memory 1108 and the one or more processors 1104. In some such embodiments, the memory controller 1108 includes a Remote Translation Table (RTT) 1112, wherein the RTT 1112 translates a virtual address received as part of a memory request received from another node 1102 into a memory request with physical addresses into the memory 1106 on the node 1102 associated with the RTT 1112. Further within some of these embodiments, the RTT 1112 is initialized upon the start of an process associated with an application or process by building a virtual to physical address translations for local virtual address space in the node 1102 corresponding to the application, and exporting the virtual to physical address translations for the local virtual address space from the node 1102 to the RTT 1112 associated with that node 1102. In some embodiments, each of the plurality of nodes 1102 executes a synchronization operation that causes at least some of the plurality of nodes 1102 to wait for all of the plurality of nodes 1102 to complete exporting the virtual to physical address translations to their respective RTT's 1112.

Yet another aspect of the present invention provides a device-readable medium having instructions thereon that cause a properly programmed device to perform a method of accessing shared memory in the device. In some embodiments, the instructions, when executed on a properly programmed information-processing device having a plurality of nodes, including a first node, each node having one or more processors, a memory, and a memory controller and coupled to the memory and the one or more processors, cause the information-processing device to distribute an application across the plurality of nodes and build an application virtual address space. In some such embodiments, building an application virtual address space includes building a local virtual address space for the application in each of the plurality of nodes, wherein the local virtual address space translates a virtual address generated by the application executing on that node to a physical address in local memory for that node, and exporting the local virtual address space for each node to a Remote Translation Table (RTT) associated with that node. In some embodiments, the instructions, when executed further include performing a memory reference to a memory location in the application virtual address space, wherein performing a memory reference to a memory location in the application virtual address space includes translating bits of the application virtual address into a node address associated with the first node and translating bits of the application virtual address using the RTT associated with the first node. In some embodiments, building a local virtual address space further includes performing a synchronization operation that causes at least some of the plurality of nodes to wait for all nodes complete exporting their respective address space. In some further embodiments, the local address space is read from a Translation Look-aside Buffer (TLB).

Still another aspect of the present invention provides a multinode system for implementing remote address translation. Some embodiments of the multinode system include a plurality of nodes, including a first node. In some such embodiments, each of the plurality of nodes includes one or more processors, a memory, and a memory controller operatively coupled to the memory and the one or more processors. These embodiments include a means for distributing an application. across the plurality of nodes and a means for building an application virtual address space. In various embodiments, the means for building an application virtual address space includes a means for building a local virtual address space for the application in each of the plurality of nodes, wherein the local virtual address space translates a virtual address generated by the application executing on that node to a physical address in local memory for that node and a means for exporting the local virtual address space for each node to a Remote Translation Table (RTT) associated with that node. Some further embodiments include a means for performing a memory reference to a memory location in the application virtual address space, wherein performing a memory reference to a memory location in the application virtual address space includes a means for translating bits of the application virtual address into a node address associated with the first node, and a means for translating bits of the application virtual address using the RTT associated with the first node. In some such embodiments, building an application virtual address space further includes a means for performing a synchronization operation that causes at least some ofthe plurality of nodes to wait for all nodes to complete exporting their respective local virtual address spaces.

### Emulated RTT (ERTT)

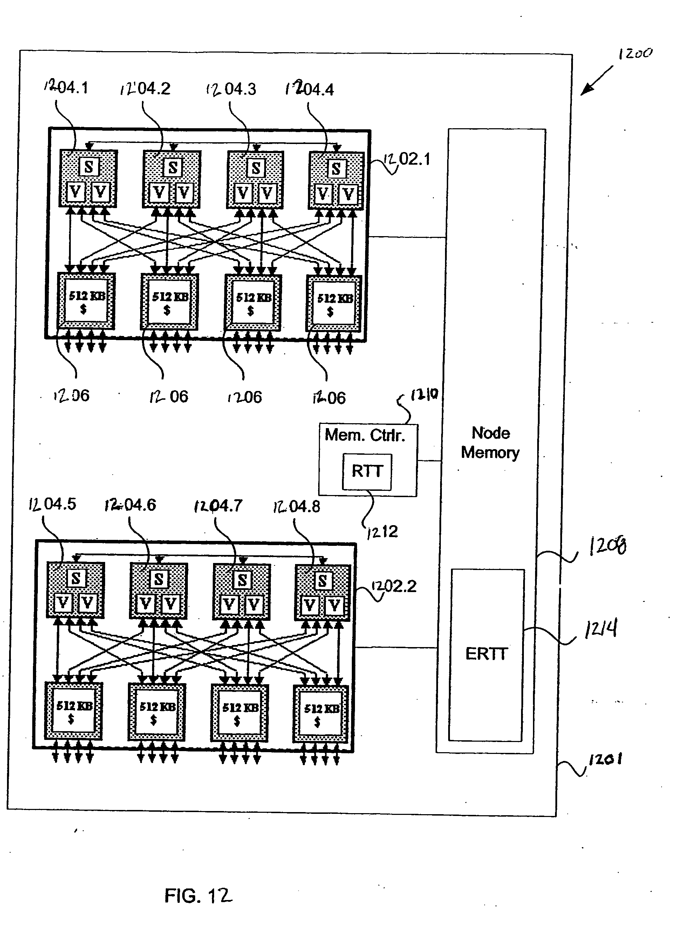

FIG. 12 is a block diagram of parallel processing hardware and operating environment 1200 in which different embodiments of the invention can be practiced. In some embodiments, environment 1200 comprises a node 1201 which includes two or more multiple processor units 1202. Although two multiple processor units 1202.1 and 1202.2 are shown in FIG. 12, it will be appreciated by those of skill in the art that other number of multiple processor units may be incorporated in environment 1200 and in configurations other than in a node 1201. In some embodiments of the invention, node 1201 may include up to four multiple processor units 1202. Each of the multiple processor units 1202 on node 1201 has access to node memory 1208, which may be controlled by one or more memory controllers 1210. In some embodiments, node 1201 is a single printed circuit board and node memory 1208 comprises daughter cards insertable on the circuit board.

In some embodiments of the invention, memory controller 1210 includes a remote translation table (RTT) 1212. The RTT 1212 contains translation information for a virtual memory address space associated with one or more remote nodes.

Additionally, some embodiments of the invention include an emulated RTT (ERTT) 1214. In FIG. 12, a logical representation of ERTT 1214 is shown as a single entity residing in node memory 1208. However, in some embodiments, ERTT 1214 comprises at least two data structures, and may reside in node memories 1208 for more than one node 1201. It is desirable to locate ERTT 1214 in a generally accessible (e.g. accessible by both applications and the kernel) node memory 1208, because the kernel may manage the ERTT 1214 without resorting to specialized hardware memory mapping such as that involved with the RTT. Further details on the structure and operation of ERTT 1214 will be provided below.

In some embodiments, a multiple processor unit 1202 includes four processors 1204.1 - 1204.4 and four cache memory controllers 1206. Although each multiple processor unit is shown in FIG. 12 as having four processors, those of skill in the art will appreciate that other embodiments of the invention may have more or fewer processors 1204. In some embodiments, each processor 1204 incorporates scalar processing logic (S) and vector processing logic (V). In some embodiments, each cache memory control 1206 may access 512 KB of memory. Each of processor 1204 may access any one or more of the cache memory controllers 1206.

In one embodiment, the hardware environment is included within the Cray X1 computer system, which represents the convergence of the Cray T3E and the traditional Cray parallel vector processors. The X1 is a highly scalable, cache coherent, shared-memory multiprocessor that uses powerful vector processors as its building blocks, and implements a modernized vector instruction set. In these embodiments, multiple processor unit 1202 is a Multi-streaming processor (MSP). It is to be noted that FIG. 12 illustrates only one example of a hardware environment, and other environments (for other embodiments) may also be used.

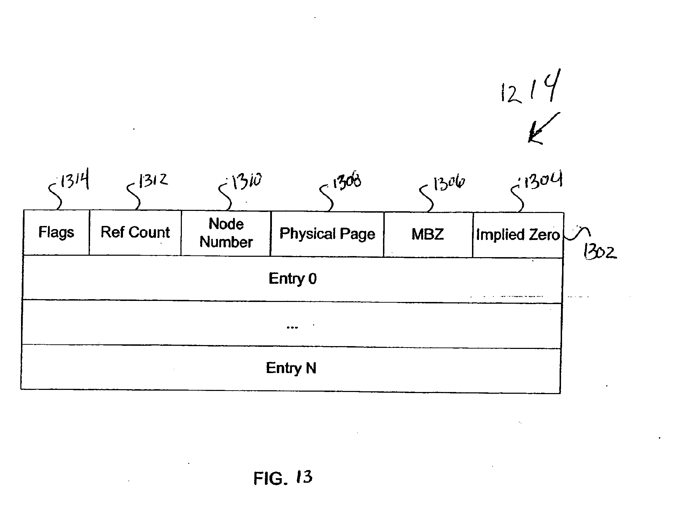

FIG. 13 is a block diagram of an ERTT segment 1302 that is included as part of ERTT 1214 according to an embodiment of the invention. In some embodiments, ERTT segment 1302 is a table of entries related to providing virtual to physical address translation. In some embodiments, each entry is 64 bits wide and comprises an implied zero field 1304, must be zero field (MBZ) 1306, physical page 1308, node number 1310, reference count 1312 and flags 1314. Implied zero field 1304 comprises bits that are typically set to zero as they are not significant in the address translation. Similarly, MBZ field 1306 comprises bits that are typically set to zero as they are also not significant in the address translation. It should be noted that these fields may or may not be physically present in the table. For example, implied zero field 1304 may not physically exist, but software executing on the system may assume that these bits would be zero when performing address translation.

Physical page 1308 comprises a page number of the physical page for an address. In some embodiments, page boundaries may range from 64 KB to 4 GB.

Node number 1310 comprises a node number identifying the physical node where the page resides.

Reference count 1312 represents a count of the number of processes currently mapping the page. As an example consider two processes A and B. A references pages P1 and P2, while B references pages P1 and P3. The reference count for the ERTT segment entry for page P1 will be 2 because both A and B reference page P1. The reference count for the ERTT segment entries for pages P2 and P3 will be 1 because only one of A or B references the page. Now assume that process B terminates. The reference count for page P3 goes to zero, the reference count for page P1 is set to 1 to reflect the fact that process B no longer references those pages. In some embodiments, when a reference count for an ERTT segment entry goes to zero, the entry is removed and made available for later reuse. In addition, in some embodiments a corresponding entry in the RTT is also cleared and made available for reuse.

Flags 1314 comprise a set of flags for the entry. In some embodiments, the flags may include a lock flag indicating that the entry should be locked to prevent another process from altering the entry thereby providing for serial access to the ERTT segment entry. A valid flag indicates that the translation in the ERTT segment entry is a valid entry. A write flag indicates whether the page is writable or not.

In some embodiments of the invention, an ERTT segment may contain 16K entries, however no embodiment of the invention is limited to any particular number of entries.

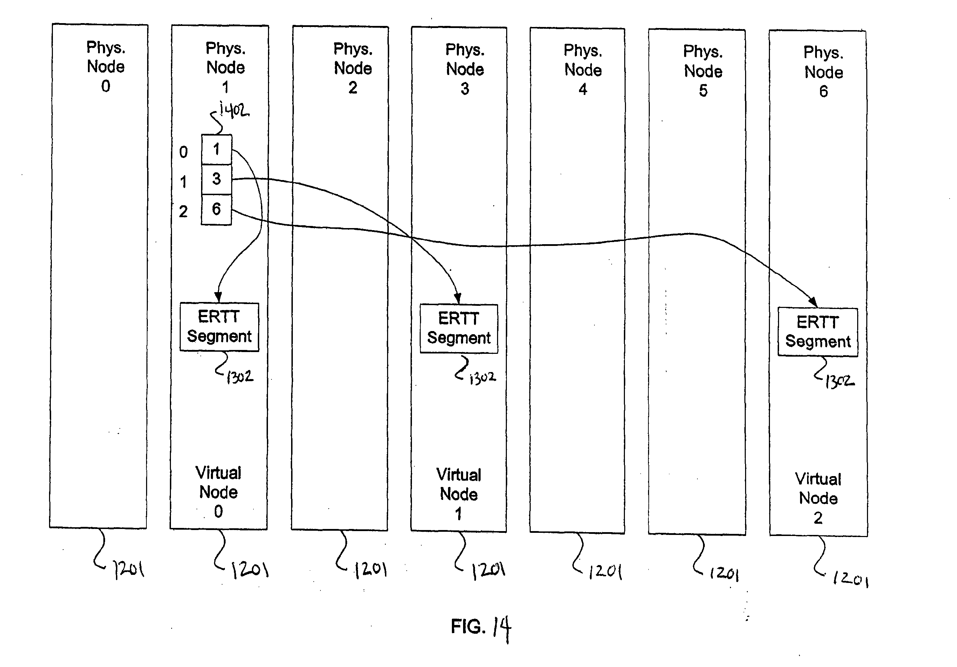

FIG. 14 is a block diagram illustrating an exemplary configuration for using an emulated remote translation table according to an embodiment of the invention. In the exemplary configuration, a number of nodes 1201 are present in a system. An application is assigned to run on three of the nodes, physical nodes 1, 3 and 6. These physical nodes are mapped to virtual nodes 0, 1 and 2. Such a mapping is desirable, because some implementations of the RTT require that nodes assigned to an application using the RTT be contiguously numbered. Providing a virtual node that is physically contiguous while mapping to a set of physical nodes that need not be physically contiguous provides for more flexibility in allocating nodes to an application while maintaining compatibility with structures and software that require that nodes be contiguous.

In some embodiments of the invention, an ERTT header 1402 is maintained by one of the nodes of the application. In some embodiments, the ERTT header 1402 is maintained at a "well known" location in the group of nodes assigned to an application. However, in alternative embodiments, ERTT header 1402 may be replicated in all nodes assigned to an application. Further, in some embodiments, ERTT 1214 includes an ERTT header 1402 that is maintained by virtual node 0 assigned to the application. ERTT header 1402 maps virtual nodes to physical nodes. The index into ERTT header is a virtual node number, and the value at that location is the physical node number corresponding to the virtual node number. The BRIT segment 1302 may then be located using the physical node number. Thus in the example shown, ERTT header 1402 establishes a mapping between virtual nodes 0, 1 and 2 and physical nodes 1, 3 and 6 respectively.

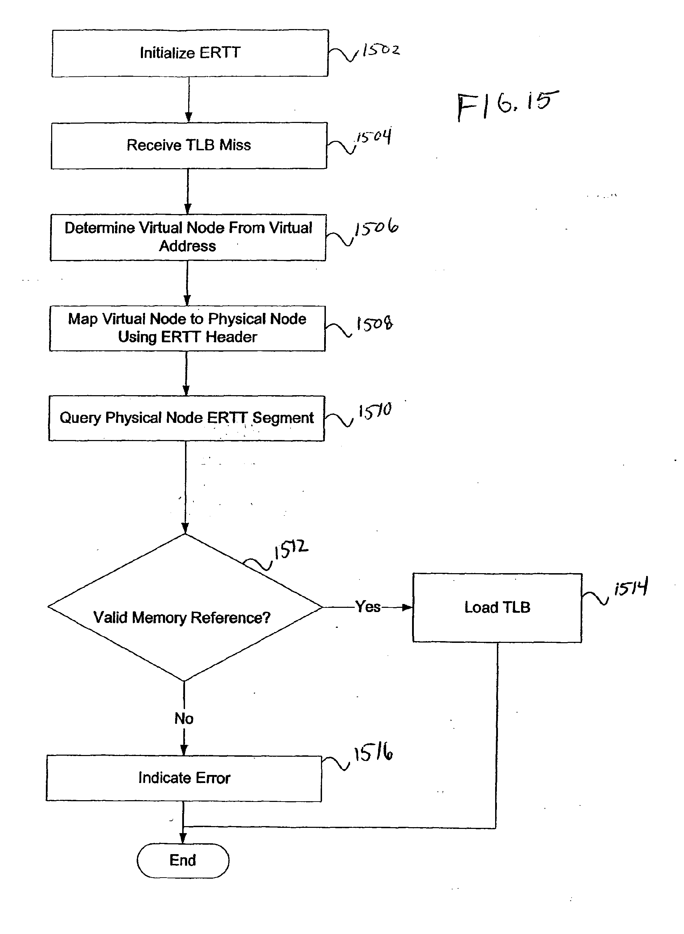

FIG. 15 is a flowchart illustrating a method for maintaining an ERTT 1214 in a parallel processing environment according to an embodiment of the invention. The method to be performed by the operating environment constitutes computer programs made up of computer-executable instructions. Describing the methods by reference to a flowchart enables one skilled in the art to develop such programs including such instructions to carry out the methods on suitable computers (the processor or processors of the computer executing the instructions from computer-readable media). The method illustrated in FIG. 15 is inclusive of acts that may be taken by an operating environment executing an exemplary embodiment of the invention.

The method begins when an ERTT is initialized (block 1502). In some embodiments, an ERTT is initialized in node memory 1208 when an application is assigned to run on one or more nodes- In some embodiments, an ERTT is maintained through the use of memory mapping functions such as "madvise", "mmap", "shmget" and the like. Additionally, the ERTT may be initialized through the normal page fault mechanism of the kernel. As page faults occur, the kernel reads pages into memory and loads the appropriate ERTT segment entry with a translation. In some embodiments, memory must be referenced locally to cause the ERTT to be loaded before a remote node attempts to access local memory.

At some point after the ERTT has been initialized, processes running on one of the nodes assigned to an application may attempt to access a virtual address that is not mapped by the TLB (Translation Lookaside Buffer) for the node. This cause a TLB miss which in turn causes memory management routines in the kernel to execute (block 1504). For convenience, one or more kernel memory management routines executed upon a TLB miss will be referred to collectively as the TLBmiss routine.

The TLBmiss routine will then attempt to map the referenced page. In some embodiments, the TLBmiss routine uses predetermined bits of the virtual address as a virtual node number (block 1506). The TLBmiss routine may the consult the ERTT header 1402 in order to determine the physical node having the physical address corresponding to the virtual address (block 1508). In some embodiments, if the virtual node maps to the same node that the application or kernel is running on, the standard operating system memory management routines may be used to make the translation to a physical page on the local node.

However, if the reference is to a remote node, the TLBmiss routine then uses the offset portion of the virtual address as an index to query the determined physical node's ERTT segment 1302 to determine if the address is valid on the physical node (block 1510). If the physical node's ERTT segment 1302 has a translation for the virtual address, then the translation is placed in the referring (i.e. the local or source) node's TLB (block 1514) In some embodiments, the ERTT segment entry may be placed directly into the TLB because the ERTT entry format matches the TLB format with respect to all significant bites.

Otherwise, an invalid reference has occurred and the kernel indicates a memory reference error to the application (block 1516). This may cause the application to terminate.

As described herein, the various embodiments of the present invention provide a number of advantages. For example, an RTT provides a scalable address translation mechanism, and is designed to avoid translation faults in large systems (unlike a regular TLB design). The RTT supports full mapping of all the memory in a machine (unlike various networking cards) to allow full load/store access to all the memory in the system. Such a system allows each node to independently manage its own virtual-to-physical memory mapping. Such a system also removes the need to implement conventional TLB "shootdown." Conventional TLB "shootdown" occurs when a node changes a local virtual-to-physical page mapping, and has to invalidate all of the TLB entries throughout the system that contain that mapping. The use of an RTT that supports full mapping removes the need to implement such an approach. These and other advantages are provided for by various embodiments of the present invention.

It is understood that the above description is intended to be illustrative, and not restrictive. Many other embodiments will be apparent to those of skill in the art upon reviewing the above description. The scope of the invention should, therefore, be determined with reference to the appended claims.

## Claims

1. A method for remotely translating a virtual memory address into a physical memory address in a multi-node system, the method comprising:
providing the virtual memory address at a source node;
determining that the virtual memory address is to be sent to a remote node;
sending the virtual memory address to the remote node; and
translating the virtual memory address on the remote node into a physical memory address using a remote-translation table (RTT),
wherein the RTT contains translation information for a virtual memory address space associated with the remote node.

2. The method of claim 1, wherein the determining that the virtual memory address is to be sent to the remote node includes determining that a virtual node field does not match the source node.

3. The method of claim 1, wherein the sending includes sending the virtual memory address to the remote node via an interconnection network.

4. The method of claim 1, wherein the translating of the virtual memory address using the RTT includes generating a status flag to indicate whether the RTT is able to translate the virtual memory address into a valid physical memory address space on the remote node.

5. The method of claim 1, wherein the translating of the virtual memory address using the RTT includes:
generating a write-enable flag to indicate whether a write is permitted to a region referenced by the virtual memory address, and
preventing the write from occurring if the write-enable flag is not set.

6. The method of claim 1, wherein the method further comprises sending a global address space identifier (GASID) to the remote node along with the virtual memory address, and wherein the translating includes using the GASID to translate the virtual memory address into a physical memory address.

7. A node comprising:
a processor; and
a memory controller operatively coupled to the processor,
wherein the memory controller includes a remote-translation table (RTT) that contains translation information for the entire virtual memory address space for the node,
wherein the memory controller receives a virtual memory address, and
wherein the memory controller translates the virtual memory address into a local physical memory address of the node using the RTT.

8. The node of claim 7, wherein the memory controller uses a global address space identifier (GASID) to translate the virtual memory address into the local physical memory address of the node using the RTT.

9. The node of claim 8, wherein the GASID corresponds to a specific application running on a different node.

10. The node of claim 8, wherein the memory controller uses the GASID and at least a portion of the virtual memory address as an index into the RTT to translate the virtual memory address into the local physical memory address.

11. The node of claim 7, wherein the memory controller generates a status flag to indicate whether the RTT is able to translate the virtual memory address into a valid local physical memory address on the node.

12. The node of claim 7, wherein the RTT contains write-enable flags to indicate whether writes are enabled for various regions of virtual memory, and
wherein the memory controller does not perform a write if the virtual memory address references a region for which writes are not enabled.

13. The node of claim 7, wherein the node further comprises:
a second processor; and
a second memory controller operatively coupled to the second processor,
wherein the second memory controller includes a second remote-translation table (RTT) that contains translation information for the entire virtual memory address space for the node,
wherein the second memory controller receives a second virtual memory address, and
wherein the second memory controller translates the second virtual memory address into a second local physical memory address of the node using the second RTT.

14. A multi-node system for implementing remote address translation, the system comprising:
a network;
a source node coupled to the network; and
a remote node coupled to the network and including a remote-translation table (RTT),
wherein the source node determines a virtual node identifier from a virtual memory address,
wherein the source node uses the virtual node identifier in accordance with a reference mechanism to determine a physical node identifier of the remote node,
wherein the source node sends a remote virtual memory address to the remote node using the physical node identifier, and
wherein the remote node translates the remote virtual memory address into a physical memory address.

15. The multi-node system of claim 14, wherein the source node sends a remote virtual memory address that includes one or more portions of the virtual memory address.

16. The multi-node system of claim 14, wherein the source node also sends a global address space identifier (GASID) to the remote node along with the remote virtual memory address, and wherein the remote node uses the GASID to translate the remote virtual memory address into a physical memory address.

17. A method for translating a virtual memory address into a physical memory address in a multi-node system, the method comprising:
providing the virtual memory address at a source node;
determining that a translation for the virtual memory address does not exist;
determining a physical node to query based on the virtual memory address;
querying an emulated remote translation table (ERTT) segment on the physical node for the translation for the virtual memory address; and
if the translation is received then loading the translation into a translation lookaside buffer (TLB) on the source node.

18. The method of claim 17, wherein the ERTT segment resides in a generally accessible memory on the physical node.

19. The method of claim 17, wherein determining a physical node includes mapping a virtual node to the physical node.

20. The method of claim 19, wherein mapping a virtual node to a physical node uses a mapping provided by an ERTT header located at a well known location to all nodes used by an application

21. The method of claim 20, wherein the ERTT header is located on a predetermined virtual node.

22. A computerized system for managing virtual address translations, the system comprising:
a plurality of nodes available for executing programs, each of said nodes having a node memory; and
an operating system executable by a source node of the plurality of nodes, the operating system operable to:
receive a virtual memory address at the source node;
determine that a translation for the virtual memory address does not exist on the source node;
determine a physical node to query based on the virtual memory address;
query an emulated remote translation table (ERTT) segment on the physical node for the translation for the virtual memory address; and
if the translation is received then loading the translation into a translation lookaside buffer (TLB) on the source node.

23. The system of claim 22, wherein the ERTT segment resides in a generally accessible memory on the physical node.

24. The system of claim 22, wherein the physical node is determined by mapping a virtual node to the physical node.

25. The system of claim 19, further comprising an ERTT header located at a well known location to all nodes used by an application to provide the mapping from a virtual node to a physical node.

26. The system of claim 25, wherein the ERTT header is located on a predetermined virtual node.

27. A computer-readable medium having computer executable instructions for executing a method for translating a virtual memory address into a physical memory address in a multi-node system, the method comprising:
providing the virtual memory address at a source node;
determining that a translation for the virtual memory address does not exist;
determining a physical node to query based on the virtual memory address;
querying an emulated remote translation table (ERTT) segment on the physical node for the translation for the virtual memory address; and
if the translation is received then loading the translation into a translation lookaside buffer (TLB) on the source node.

28. The computer-readable medium of claim 27, wherein the ERTT segment resides in a generally accessible memory on the physical node.

29. The computer-readable medium of claim 27, wherein determining a physical node includes mapping a virtual node to the physical node.

30. The computer-readable medium of claim 29, wherein mapping a virtual node to a physical node uses a mapping provided by an ERTT header located at a well known location to all nodes used by an application

31. The computer-readable medium of claim 30, wherein the ERTT header is located on a predetermined virtual node.

32. A method of accessing shared memory in a computer system having a plurality of nodes, including a first node, wherein each node includes a processor and local memory, the method comprising:
distributing an application across the plurality of nodes;
building an application virtual address space, wherein building an application virtual address space includes:
building a local virtual address space for the application in each of the plurality of nodes, wherein the local virtual address space translates a virtual address generated by the application executing on that node to a physical address in local memory for that node; and
exporting the local virtual address space for each node to a Remote Translation Table (RTT) associated with that node; and
performing a memory reference to a memory location in the application virtual address space, wherein performing a memory reference to a memory location in the application virtual address space includes translating bits of the application virtual address into a node address associated with the first node and translating bits of the application virtual address using the RTT associated with the first node.

33. The method of claim 32, wherein the local address space is read from a Translation Look-aside Buffer (TLB).

34. The method of claim 32, wherein building an application virtual address space further includes performing a synchronization operation that causes at least some of the plurality of nodes to wait for all nodes to complete exporting their respective local virtual address spaces.

35. A system comprising:
a plurality of nodes, each node including:
one or more processors;
a memory; and
a memory controller operatively coupled to the memory and the one or more processors, wherein the memory controller includes a Remote Translation Table (RTT), wherein the RTT translates a virtual address received as part of a memory request received from another node into a memory request with physical addresses into the memory on the node associated with the RTT;
further wherein the RTT is initialized upon the start of a process associated with an application by building virtual to physical address translations for local virtual address space in the node corresponding to the application, and exporting the virtual to physical address translations for the local virtual address space from the node to the Remote Translation Table (RTT) associated with that node.

36. The system of claim 35, wherein each of the plurality of nodes executes a synchronization operation that causes at least some of the plurality of nodes to wait for all of the plurality of nodes to complete exporting the virtual to physical address translations to their respective Remote Translation Tables.

37. A device-readable medium having instructions thereon that, when executed on a properly programmed information-processing device having a plurality of nodes, including a first node, each node having one or more processors, a memory, and a memory controller and coupled to the memory and the one or more processors, causes the information-processing device to perform a method comprising:
distributing an application across the plurality of nodes;
building an application virtual address space, wherein building an application virtual address space includes:
building a local virtual address space for the application in each of the plurality of nodes, wherein the local virtual address space translates a virtual address generated by the application executing on that node to a physical address in local memory for that node; and
exporting the local virtual address space for each node to a Remote Translation Table (RTT) associated with that node; and
performing a memory reference to a memory location in the application virtual address space, wherein performing a memory reference to a memory location in the application virtual address space includes translating bits of the application virtual address into a node address associated with the first node and translating bits of the application virtual address using the RTT associated with the first node.

38. The device-readable medium of claim 37, wherein building a local virtual address space further includes performing a synchronization operation that causes at least some of the plurality of nodes to wait for all nodes complete exporting their respective address space.

39. The device-readable medium of claim 37, wherein the local address space is read from a Translation Look-aside Buffer (TLB).

40. A multinode system for implementing remote address translation, the system comprising:
a plurality of nodes, including a first node, each of the plurality of nodes including:
one or more processors,
a memory, and
a memory controller operatively coupled to the memory and the one or more processors; means for distributing an application across the plurality of nodes;
means for building an application virtual address space, wherein the means for building an application virtual address space includes:
means for building a local virtual address space for the application in each of the plurality of nodes, wherein the local virtual address space translates a virtual address generated by the application executing on that node to a physical address in local memory for that node; and
means for exporting the local virtual address space for each node to a Remote Translation Table (RTT) associated with that node; and
means for performing a memory reference to a memory location in the application virtual address space, wherein performing a memory reference to a memory location in the application virtual address space includes:
means for translating bits of the application virtual address into a node address associated with the first node, and
means for translating bits of the application virtual address using the RTT associated with the first node.

41. The multinode system of claim 40, wherein building an application virtual address space further includes a means for performing a synchronization operation that causes at least some of the plurality of nodes to wait for all nodes to complete exporting their respective local virtual address spaces.

42. A carrier medium carrying computer readable code for controlling a processor apparatus to carry out the method of any one of claims 1 to 6, 17 to 21 or 32 to 34.
